# EUROPEAN PATENT APPLICATION

(11) **EP 4 470 679 A1**
(43) Date of publication of application: **04.12.2024**
(21) Application number: 24175165.0
(22) Date of filing: 10.05.2024
(51) Int. Cl.: B05C 5/02

(54) **SLOT DIE COATING APPARATUS AND THE COATING METHOD THEREOF**

(30) Priority: 23.05.2023 TW 112119056
(71) Applicant: Prologium Technology Co., Ltd., Taoyuan City (TW)
(72) Inventor: LIN, Chia-Ming, Taoyuan City (TW); YANG, Szu-Nan, Taoyuan City (TW); HUANG, Chia-Chi, Taoyuan City (TW)
(74) Representative: Cabinet Chaillot

(57) **Abstract**

The invention provides a slot die coating apparatus and the coating method thereof. The flow path is divided into a first flow path and a second flow path by the shim group. The first flow path is utilized to coat from the middle portion of the coating nozzle and the second flow path is utilized to coat from the two sides of the coating nozzle. The nozzle lips at the two sides of the slot die coating apparatus are extended to close the substrate to prevent to hit the obstacle of the substrate during coating. Also, the height for coating of the slot die coating apparatus is controllable to achieve the optimized coating.

## Description

### BACKGROUND OF THE INVENTION

### CROSS REFERENCES TO RELATED APPLICATIONS

The present application claims priority to Taiwanese Patent Application 112119056 filed in the Taiwanese Patent Office on May 23, 2023, the entire contents of which is being incorporated herein by reference.

### Field of Invention

The present invention relates to a die coating apparatus, in particular to a die coating apparatus with two flow paths and two outlets with different heights and the related coating method.

### Related Art

A slot coating head is utilized to dispense the slurry through a slot nozzle for the slot die coating to coat on the substrate to be coated. The slot nozzle is very suitable for large-area coating due to its broader width. It can be used with rollers or conveyors to achieve a continuous coating.

However, in case of that the components, such as semiconductors components, are presented on the substrate, the components on the substrate will form a three-dimensional obstacle during the slot coating process. For example, when a frame-shaped coating is to be carried out around the component, due to the existence of the obstacle, the frame-shaped coating cannot be completed in a single one process. However, it is considered that the slot coating is still an efficient process to be used. Therefore, the conventional method is to coat one pair of corresponding two sides of the frame first, then rotate the substrate ninety degrees to coat another set of two opposite sides. In this way, the overall process steps will become complex and time-consuming, and it will also be difficult to achieve continuous mass production.

Furthermore, in case of the thickness of the component on the substrate is relatively large, when the coating head passes through the component, the slot nozzle at the bottom may collide with the component and scratch the surface of the component. Therefore, in this case, the frame-shaped coating must be carried out on each of the four sides respectively. The complexity and time cost of the overall process will be greatly increased.

Therefore, this invention provides a slot die coating apparatus and the coating method thereof to mitigate or obviate the aforementioned problems.

### SUMMARY OF THE INVENTION

It is an objective of this invention to provide a new slot die coating apparatus and the coating method thereof, which can achieve a single one process to form a frame-shaped coating on substrates with obstacles without significantly changing the structure of the slot coating head device by utilizing the shim group. Therefore, the process complexity and manufacturing costs are significantly reduced.

Also, it is another objective of this invention to a slot die coating apparatus and the coating method thereof. The flow path of the slot die coating apparatus is divided into a first flow path and a second flow path to coat the lateral and longitudinal sides of the frame-shaped coating respectively. Therefore, a frame-shaped coating around the component is achieved by a single slot die coating apparatus via a single one process.

Also, it is another objective of this invention to a slot die coating apparatus and the coating method thereof. The shim group forms the lower nozzle lip in the two sides and the higher nozzle lip in the middle portion in the die body. And, the height of the slot die coating apparatus is adjustable to avoid the collision between the slot die coating apparatus and the components on the substrate, and the coating quality is optimized.

In order to implement the abovementioned, this invention discloses a slot die coating apparatus, which includes a die body and a shim group. The die body has a flow path and a coating nozzle receiving a slurry from the flow path to dispense the slurry for coating. The shim group is disposed in the die body to divide the flow path into a first flow path and a second flow path. The slurry through the first flow path is dispensed from a middle portion of the coating nozzle and the slurry through the second flow path is dispensed from two sides of the coating nozzle. The shim group includes two die lips, which are corresponding to the second flow path and extended outward and protruded from the die body. A distance between a first outlet of the first flow path and the substrate is greater than a distance between a second outlet of the second flow path and the substrate. It is controlled to dispense the slurry from the first flow path in front of and behind the obstacle of the substrate to form the lateral sides, and dispense the slurry from the second flow path on both sides of the obstacle of the substrate to form the longitudinal sides on the substrate. Therefore, a frame-shaped coating around the component is achieved via a single one process. The collision between the slot die coating apparatus and the components on the substrate is avoided.

This invention further discloses a slot die coating method, comprising the steps of
providing the substrate with the obstacle and a slot die coating apparatus, wherein the slot die coating apparatus comprising:
   a die body, having a flow path and a coating nozzle receiving a slurry from the flow path to dispense the slurry for coating; and
   a shim group, disposed in the die body to divide the flow path into a first flow path and a second flow path, wherein the slurry through the first flow path is dispensed from a middle portion of the coating nozzle and the slurry through the second flow path is dispensed from two sides of the coating nozzle;
   wherein the shim group includes two die lips, which are corresponding to the second flow path and extended outward and protruded from the die body, and a distance between a first outlet of the first flow path and the substrate is greater than a distance between a second outlet of the second flow path and the substrate;;
dispensing the slurry from the notch in front of the obstacle of the substrate to form a first lateral side;
closing the dispensing from the notch when detecting close to the obstacle and moving the slot die coating apparatus far away from the substrate to prevent it from colliding the obstacle;
dispensing the slurry from the first flow path slot and the second flow path slot on both sides of the obstacle of the substrate to form two longitudinal sides on the substrate;
closing the dispensing from the first flow path slot and the second flow path slot when detecting pass the obstacle and moving the slot die coating apparatus downward to an original height with respect to the substrate; and
dispensing the slurry from the notch behind the obstacle of the substrate to form a second lateral side.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a schematic diagram of the embodiments of the slot die coating apparatus of this invention.
FIG. 2 is an exploded view of the embodiments of the slot die coating apparatus of this invention.
FIG. 3 is a schematic diagram of the embodiments of the slot die coating apparatus of this invention, showing the coating condition.
FIGS. 4A-4D are schematic diagrams of the embodiments of the slot die coating method of this invention.
FIGS. 5A-5B are schematic diagrams of the embodiments of the slot die coating method of this invention.
FIGS. 6A-6B are schematic diagrams of the embodiments of the slot die coating method of this invention.
FIGS. 7A-7B are schematic diagrams of the embodiments of the slot die coating method of this invention.
FIGS. 8A-8B are schematic diagrams of the embodiments of the slot die coating method of this invention.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the description of the present invention, it should be noted that the terms "installation", "connected", and "disposed" are to be understood broadly, and may be fixed or detachable, for example, can be mechanical or electrical, can be connected directly or indirectly, through an intermediate medium, which can be the internal connection between two components. The specific meanings of the above terms in the present invention can be understood in the specific circumstances by those skilled in the art.

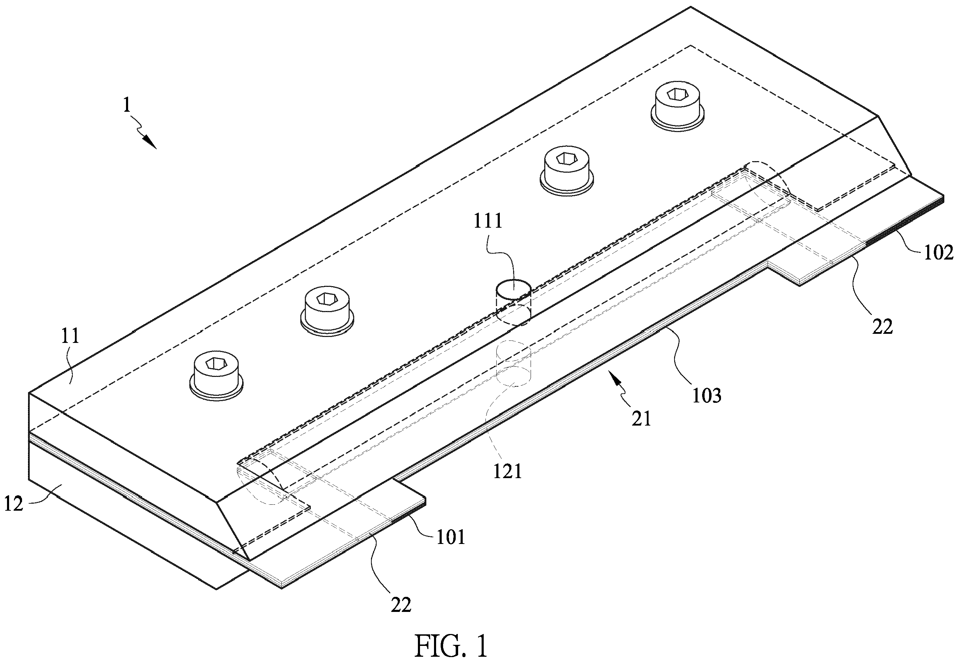

This invention discloses a slot die coating apparatus. Please refer to FIGS. 1-2, the slot die coating apparatus 1 includes a die body and a coating nozzle located on the bottom of the die body. The slurry is driven into the die body via an external equipment such as a pump, and then is dispensed through the coating nozzle. The details of the external equipment such as a pump are the same as those of the conventional slot coating head. Therefore the external pump is ignored in the figure. In the figures, the slot die coating apparatus 1, which is the feature of this invention, is mainly shown.

As shown in FIGS. 1-2, the die body is composed of an upper mold 11, which has trapezoidal cross section, and a lower mold 12, which has trapezoidal cross section. The upper mold 11 includes a first slurry storage slot 112, and the lower mold 12 includes a second slurry storage slot 122. Also, the upper mold 11 and the lower mold 12 include an upper inlet 111 and a lower inlet 112. The upper inlet 111 is connected to the first slurry storage slot 112 and the lower inlet 121 is connected to the second slurry storage slot 122. In the conventional structure, the upper mold 11 and the lower mold 12 are coupled with each other directly. The first slurry storage slot 112 and the second slurry storage slot 122 will be assembled to form a single flow path. The coating nozzle, formed in the ends at the inclined planes of the two trapezoids, discharges the slurry for coating. However, in this invention, the shim group is disposed and sandwiched between the upper mold 11 and the lower mold 12 to completely separate the first slurry storage slot 112 and the second slurry storage slot 122. Therefore, the first flow path and the second flow path, which are not connected to each other, will be formed.

The shim group is sandwiched between the upper mold 11 and the lower mold 12, and includes a central shim plate 14, an upper shim plate 13, a first lower shim plate 16 and a second lower shim plate 15. The central shim plate 14 is U-shaped and includes a central shim plate body 141 and two extended portions 142, which are located on the end portions of two sides of the central shim plate body 141 and extend toward to the coating nozzle. The central shim plate body 141 does not have any holes or slots in the positions corresponding to the first slurry storage slot 112 and the second slurry storage slot 122. Therefore, the first slurry storage slot 112 and the second slurry storage slot 122 are completely separated to form the first flow path and the second flow path, which are not connected to each other. A width of the first notch 143 formed by the two extended portions 142 on the central shim plate body 141 is T1. The first notch 143 is flush with the coating nozzle ,i.e. in the ends at the inclined planes of the two trapezoids of the first mold 11 and the second mold 12. The upper shim plate 13 is U-shaped, and includes an upper shim plate body 132 and two extended portions 133, extended from the two side edges of the upper shim plate body 132 toward to the coating nozzle. Therefore, a second notch 131 will be formed in the middle portion. The width of the second notch 131 is T2, and T2>T1. The upper shim plate 13 is flatly disposed on one side of the central shim plate 14. The second notch 131 is connected to most parts of the first slurry storage slot 112, and only two edges of the first slurry storage slot 112 are shielded. The slurry from the first slurry storage slot 112 will be blocked by the central shim plate 14 to expose from the second notch 131 to form a first flow path, which dispense the slurry from the middle portion of the coating nozzle.

A first lower shim plate 16 and a second lower shim plate 15 are sandwiched sequentially between the central shim plate 14 and the lower mold 12. The first lower shim plate 16 shields parts of the second slurry storage slot 122 of the lower mold 12 and has two through holes 161 corresponding to two sides of the second slurry storage slot 122. The second lower shim plate 15 has two flow path slots 151 corresponding to the through holes 161. The slurry from the second slurry storage slot 122 is dispensed from the both sides of the coating nozzle via the through holes 161 and the flow path slots 151. The first lower shim plate 16 and the second lower shim plate 15 are also U-shaped. The first lower shim plate 16 includes a first lower shim plate body 163 and two extended portions 164, which are located on the end portions of two sides of the first lower shim plate body 163 and extend toward to the coating nozzle. A third notch 162 is formed between the two extended portions 164. The second lower shim plate 15 includes a second lower shim plate body 153 and two extended portions 154, which are located on the end portions of two sides of the second lower shim plate body 153 and extend toward to the coating nozzle. A fourth notch 152 is formed between the two extended portions 154. The width of the third notch 162 is T3, and the width of the fourth notch 152 is T4. The widths T3 and T4 are substantially equal to the width T1 of the first notch 143. Therefore, the flow path slots 151 of the second lower shim plate 15 are sandwiched between the first lower shim plate 16 and the central shim plate 14 to maintain the stability of the dispensing from the second flow path.

By separation of the central shim plate 14, the first flow path and the second flow path, which are formed by the first slurry storage slot 112 and the second slurry storage slot 122 respectively, are completely separated without connecting to each other. Therefore, by determining the slurry entering into the upper inlet 111 or the lower inlet 121, the dispensing of the slurry from one of the flow path, i.e. the first flow path or the second flow path, is controlled. The slurry is dispensed from the middle portion, the first flow path, or the two sides, the second flow pate, of the coating nozzle is selectable or adjustable. Therefore, coating in both longitudinal and lateral directions are made to achieve frame-shaped coating with single one process of single one coating head. In other words, the object to be coated is maintained to be driven in only one direction without turning or other actions, and frame-shaped coating can be achieved through the slot die coating apparatus 1 of this invention. The more detailed description presented below.

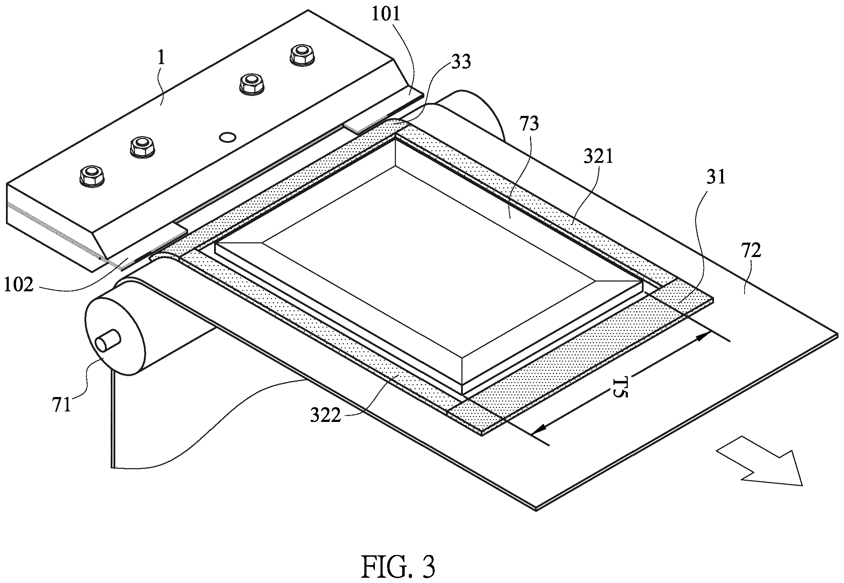

Please refer to FIG. 3, the slot die coating apparatus 1 of this invention is adapted for coating on a substrate 72 with an obstacle 73 to form a frame-shaped coating around the obstacle 73. The obstacle 73 may be a semiconductor chip disposed on the substrate 72 or any other component protruded from the surface of the substrate 72. The frame includes a first lateral side 31 and a second lateral side 32, which are lateral sides, close to the front and rear ends of the obstacle 73, and a first longitudinal side 321 and a second longitudinal side 322, which are longitudinal sides, close to the two sides of the obstacle 73. As shown in the figure, if the substrate 72 is thinner or flexible, the roller 71 can be utilized to drive the substrate 72 to move relative to the slot die coating apparatus 1. And the slurry is dispensed by the slot die coating apparatus 1 to coat the surface of the substrate 72. However, the roller 71 is only for illustration and is not limited to that this invention can only use the roller 71 to move the substrate 72 relative to the slot die coating apparatus 1 to coat the surface of the substrate 72. Other methods, such as the conveyor or any other means can be used. Moreover, for the completeness of the frame, the first lateral side 31 and the second lateral side 32 have to connect to the first longitudinal side 321 and the second longitudinal side 322. Therefore, the width T2 of the second notch 131 of the upper shim plate 13 has to be extended and overlapped with parts of the flow path slots 151 of the second lower shim plate 15. The flow path slots 151 will be located at two ends of the second notch 131 respectively. The flow path slots 151 are partially overlapped with the second notch 131, see FIGS. 1-2. In other words, the width of the second notch 131 is T2. A distance between an inner side walls of the two flow path slots 151 is T6. The length of the lateral side of the obstacle 73 is T5. The magnitude relationship of the is T2>T6>T5.

Moreover, the obstacle 73 is the component, which is preformed on the surface of the substrate 72 before coating the frame. Due to the component is with a certain height, it is so-called the obstacle 73. The type of the component is not limited. When coating the first longitudinal side 321 and the second longitudinal side 322 on the both sides of the obstacle 73, the slot die coating apparatus 1 will pass the obstacle 73 in the single one coating process. It is considered that the obstacle 73 is with a certain height, to prevent it from scratching the surface of the component, the slot die coating apparatus 1 is controlled to move far away from the surface of the substrate 72 during coating the first longitudinal side 321 and the second longitudinal side 322, comparing to coat the first longitudinal side 321 and the second longitudinal side 322. Therefore, the second outlet 22 used to coat the first longitudinal side 321 and the second longitudinal side 322 has to be closer to the substrate 72 to achieve a better coating. Please refer to FIGS. 1-2, in this invention, the two sides of the shim group used to form the second outlet 22 are extended downward. The central shim plate 14, the upper shim plate 13, the first lower shim plate 16 and the second lower shim plate 15 form a first die lip 101 and a second die lip 102, corresponding to the flow path slots 151 of the second flow path and extended outside the bottom of the upper mold 11 and the lower mold 12. Therefore, the second outlet 22 will extend to the first die lip 101 and the second die lip 102. The slurry from the second slurry storage slot 122 will pass through the through holes 161 of the first lower shim plate 16 and the flow path slots 151 of the second lower shim plate 15 blocked by the central shim plate 14 to dispense from the second outlet 22. The first outlet 21 of the first flow path in the middle portion is located at the third die lip 103 which is higher than the second outlet 22. The slurry from the first slurry storage slot 112 will block by the central shim plate 14 and expose from the second notch 131 of the upper shim plate 13 to dispense from the first outlet 21.

With such structure, during coating the first lateral side 31 and the second lateral side 33 at the front and rear ends of the obstacle 73, the slot die coating apparatus 1 is controlled to be close to the substrate 72. During coating the first longitudinal side 321 and the second longitudinal side 322 at both sides of the obstacle 73, the slot die coating apparatus 1 is controlled to be slightly away from the substrate 72 to avoid colliding the obstacle 73 by the middle portion without the first die lip 101 and the second die lip 102. The first die lip 101 and the second die lip 102 on both sides are extend downward to make the second outlet 22 of the second flow path be closer to the substrate 72 to obtain a better coating. The more detailed description presented below corresponding to the process.

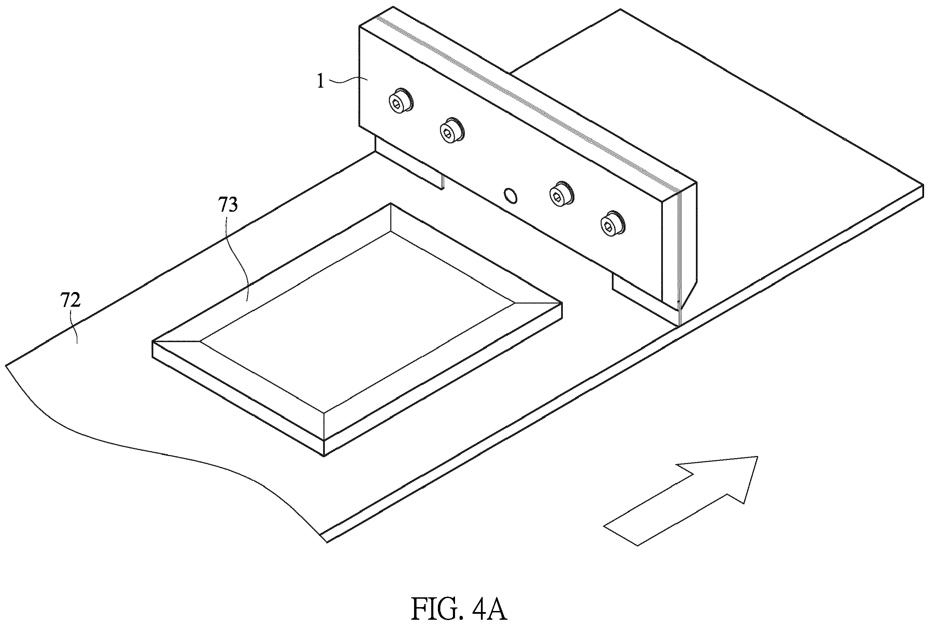

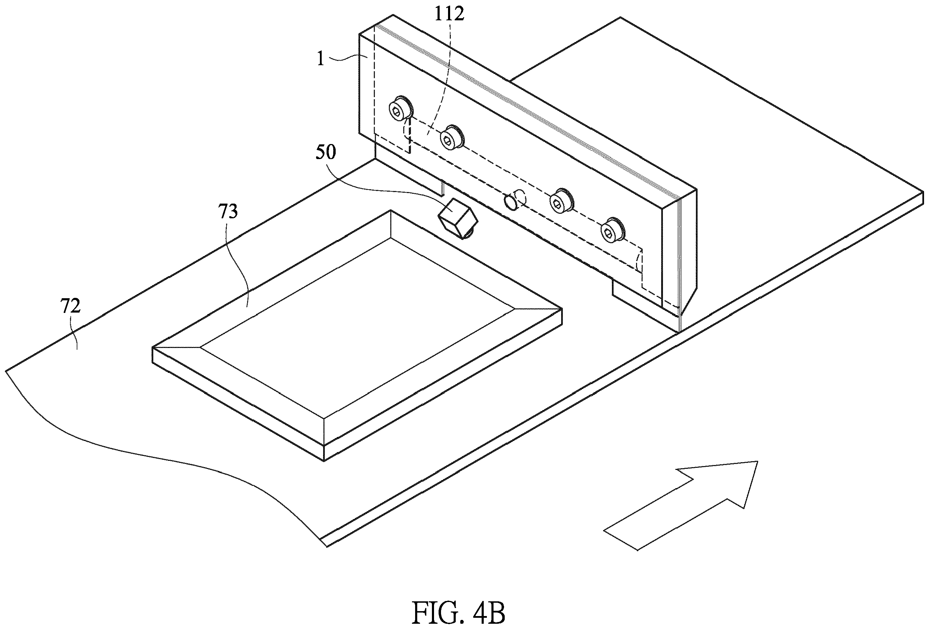

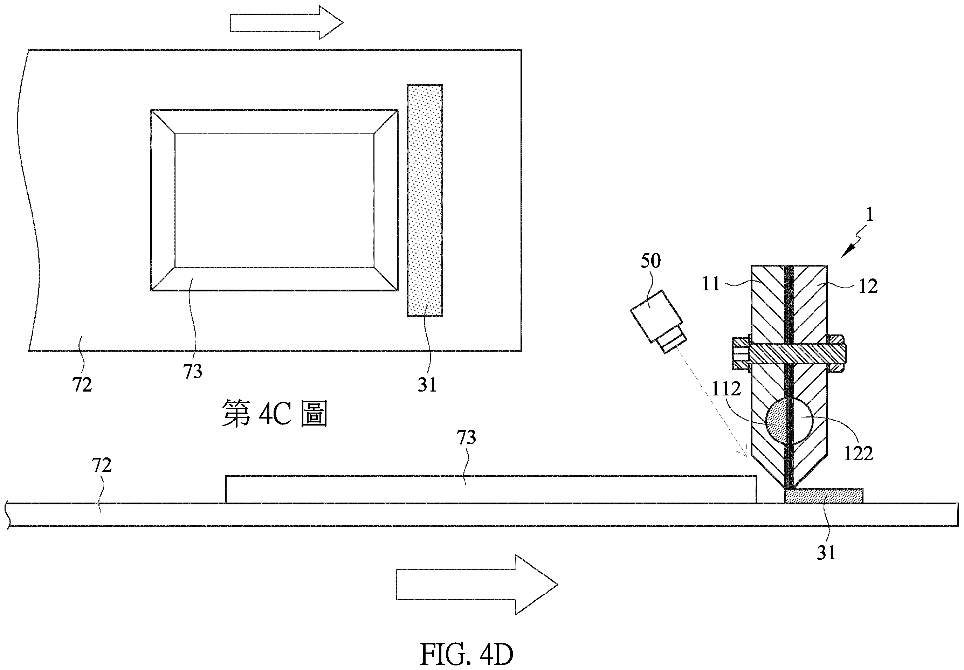

This invention discloses a slot die coating method, please refer to FIG. 4A. The slot die coating apparatus 1 of this invention is utilized for coating on the substrate 72 with the obstacle 73. The slurry is dispensed around the obstacle 73 of the substrate 72 to form a frame. As above-mentioned, the feeder of the slot die coating apparatus 1, the driving system of the substrate 72, etc. are not the main features of this invention. Therefore, in the following figures, including this figure, do not present these devices or equipment. Also, in the figure, only one obstacle 73 is presented for illustration. If mass production is considered, the obstacles 73 on the substrate 72 can also be designed to be arranged in multiple or periodical configurations. The first flow path and the second flow path can be switched during predetermined time or progress for control. Moreover, as shown in FIG. 4B, a sensor 50 may be used to detect a relative position of the obstacle 73 of the substrate 72 with respect to the slot die coating apparatus 1 for more precise coating. The following description is presented in case of having the sensor 50.

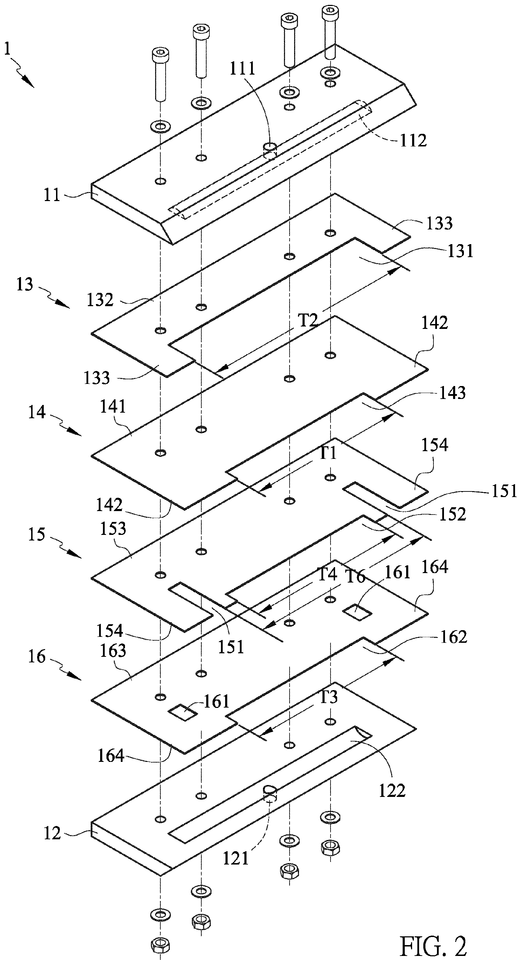

Please refer to FIG. 4B, the substrate 72 with the obstacle 73 and the slot die coating apparatus 1 are provided. The structure of the slot die coating apparatus 1 is as above-mentioned and shown in FIG . 1, which can switch to dispense the slurry form the middle portion from the first outlet 21 of the first flow path and the both sides from the second outlet 22 of the second flow path. Also, it is considered that the obstacle 73 has a thickness. The position of the first outlet 21 of the first flow path is higher than the position of the second outlet 22 of the second flow path, i.e. the second outlet 22 is closer to the substrate 72 than the first outlet 21. That is, the slot die coating apparatus 1 has the first die lip 101 and the second die lip 102 extended on both sides. The first die lip 101 and the second die lip 102 will be closer to the surface of the substrate 72. Please refer to FIGS. 4C-4D, the first flow path of the slot die coating apparatus 1 is utilized to dispense the slurry in front of the obstacle 73 of the substrate 72 to form a first lateral side 31. Please also refer to FIG. 2, it means that the slurry is fed from the upper inlet 111. The slurry is flowed through the first slurry storage slot 112 and exposed from the second notch 131 of the upper shim plate 13 to dispense from the first outlet 21.

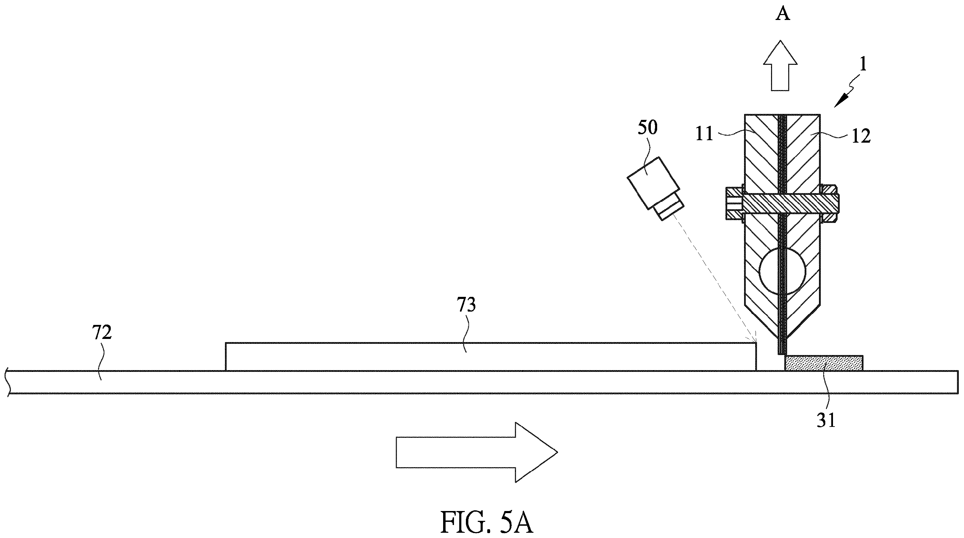

When the sensor 50 detects that it is close to the obstacle 73, please refer to FIG. 5A, the dispensing from the first flow path is closed. And the slot die coating apparatus 1 is moved far away from the substrate 72. As shown in the figure, the movement direction A of the slot die coating apparatus 1 is upward. In other words, the slot die coating apparatus 1 is moved upward along the Z-axis direction of the plane where the substrate 72 is located. Therefore, the first outlet 21 of the first flow path in moved upward to prevent it from colliding the obstacle 73. The lifted height of the slot die coating apparatus 1 is depended on the thickness of the obstacle 73 and the original height of the slot die coating apparatus 1. Due to the first outlet 21 of the first flow path is located at the middle portion of the slot die coating apparatus 1 and the height of the slot die coating apparatus 1 is lifted, the obstacle 73 will pass through between the first die lip 101 and the second die lip 102. The first outlet 21 of the slot die coating apparatus 1 colliding with the obstacle 73 and resulting in damage or scratches to the first outlet 21 or the obstacle 73 can be avoided.

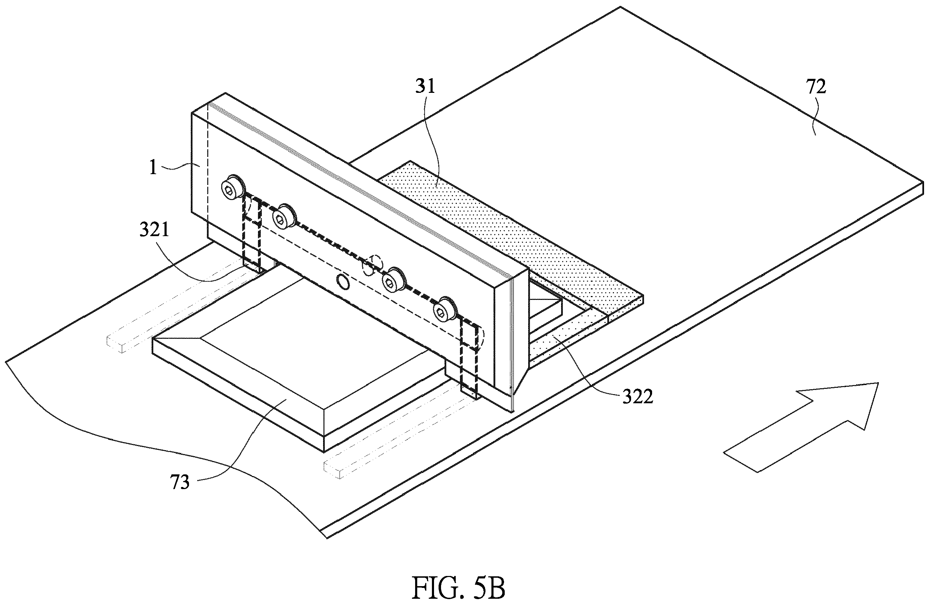

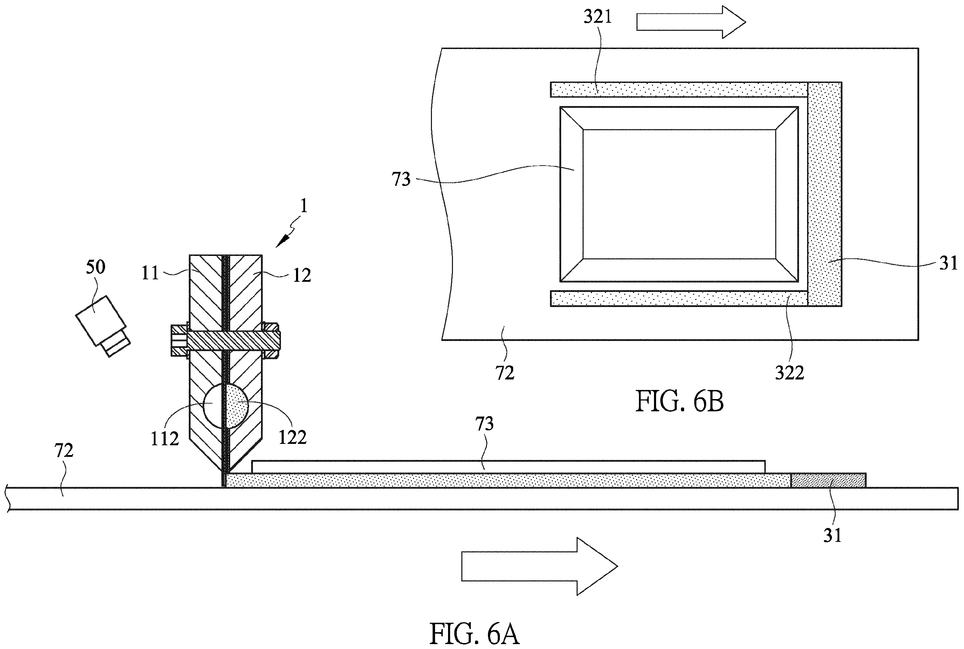

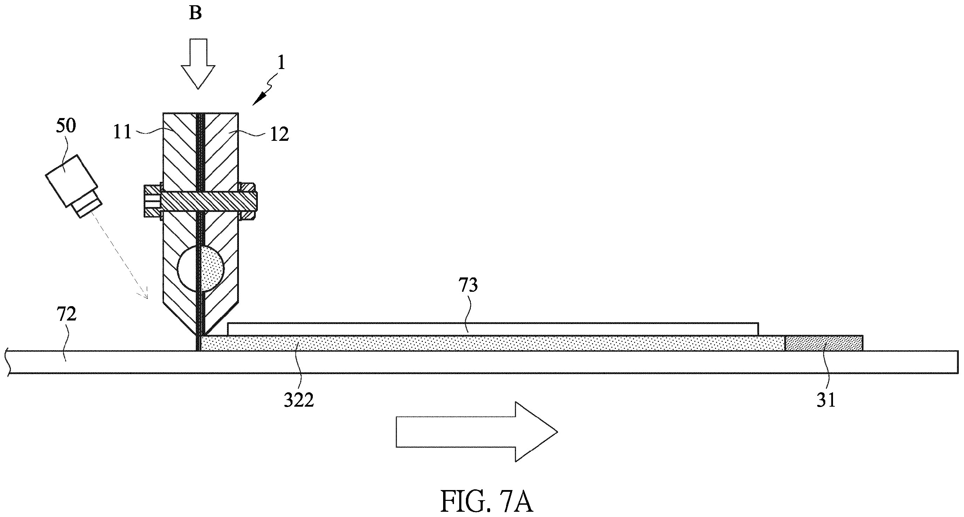

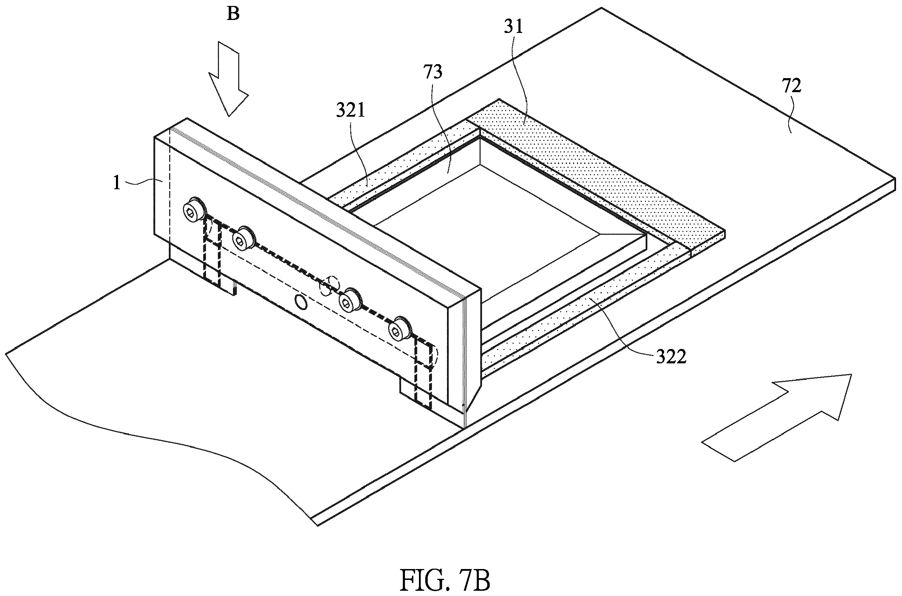

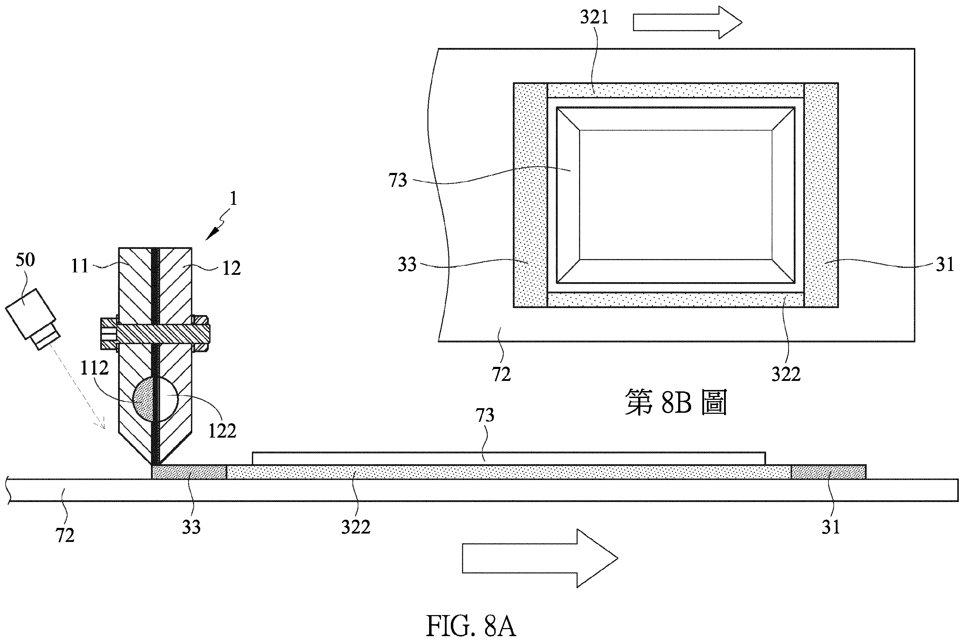

Then the second flow path of the slot die coating apparatus is utilized to coat the both sides of the obstacle 73 on the substrate 72 to form the first longitudinal side 321 and the second longitudinal side 322, referring to FIG. 5B. The second outlet 22 of the second flow path is continued to be utilized for coating until the first longitudinal side 321 and the second longitudinal side 322 located on both sides of the obstacle 73 is complete, shown in FIGS. 6A-6B. The position of the second outlet 22 of the second flow path is lower, i.e. to be closer to the surface of the substrate 72. Even the slot die coating apparatus 1 is lifted to far away from the substrate 72, the second outlet 22 is relatively close to the substrate 72. Therefore, a good coating can still be achieved. Please refer to FIGS. 7A-7B, the dispensing from the second flow path is closed when detecting pass the obstacle 73. And the slot die coating apparatus 1 is moved downward to the original height with respect to the substrate 72. As shown in the figure, the movement direction B of the slot die coating apparatus 1 is downward. In other words, the slot die coating apparatus 1 is moved downward along the Z-axis direction of the plane where the substrate 72 is located. The first outlet 21 of the first flow path is utilized to dispense the slurry behind the obstacle 73 of the substrate 72 to form the second lateral side 33. Please refer to FIG. 8A-8B, the coating of the second lateral side 33 is the same as the above-mentioned coating of the second lateral side 31. Therefore, the repeated description is omitted. Accordingly, the coating of the frame around the obstacle 73 is completed. Only single one slot die coating apparatus 1 is used in a single process without changing the driven direction of the substrate 72 as in the conventional coating. Also, the slot die coating apparatus 1 has the first die lip 101 and the second die lip 102 extended and protruded from two side ends to optimize the coating of the entire frame without colliding with the obstacle 73 on the substrate 72 .

It can be seen from the above-mentioned manufacturing processes for coating the entire frame, that the substrate 72 only moves along a single axis (horizontal direction in the figure) relative to the slot die coating apparatus 1, and the slot die coating apparatus 1 only moves along the Z-axis relative to the substrate 72 (direction perpendicular to the surface of substrate 72). Unlike the conventional coating, the substrate needs to be rotated relative to the coating head device to complete the entire frame coating. Therefore, the present invention can use rollers or conveyor to transport the substrate 72 to achieve high-efficiency and continuous production.

Accordingly, the present invention provides a slot die coating apparatus and the coating method thereof, which can achieve a single one process to form a frame-shaped coating on substrates with obstacles without significantly changing the structure of the slot coating head device by utilizing the shim group. Therefore, the process complexity and manufacturing costs are significantly reduced. Also, the flow path of the slot die coating apparatus is divided into a first flow path and a second flow path to coat the lateral and longitudinal sides of the frame-shaped coating respectively. Therefore, a frame-shaped coating around the component is achieved by a single slot die coating apparatus via a single one process. Further, the shim group is extended and protruded from the die body to form the die lips. The die lips is higher in the middle portion, i.e. far away from the substrate, and is lower at both sides, i.e. close to the substrate. Also, the height of the slot die coating apparatus is adjustable to avoid the collision between the slot die coating apparatus and the components on the substrate, and the coating quality is optimized.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A slot die coating apparatus (1), adapted for coating on a substrate (72), comprising:
a die body, having a flow path and a coating nozzle receiving a slurry from the flow path to dispense the slurry for coating; and
a shim group, disposed in the die body to divide the flow path into a first flow path and a second flow path, wherein the slurry through the first flow path is dispensed from a middle portion of the coating nozzle and the slurry through the second flow path is dispensed from two sides of the coating nozzle;
wherein the shim group includes two die lips (101, 102), which are corresponding to the second flow path and extended outward and protruded from the die body, and a distance between a first outlet (21) of the first flow path and the substrate (72) is greater than a distance between a second outlet (22) of the second flow path and the substrate (72).

2. The slot die coating apparatus (1) of claim 1, wherein the die body includes an upper mold (11), with a first slurry storage slot (112), and a lower mold (12), with a second slurry storage slot (122).

3. The slot die coating apparatus (1) of claim 2, wherein the upper mold (11) includes an upper inlet (111) and the lower mold (12) includes a lower inlet (121), where the slurry is guided in the first slurry storage slot (112) and the second slurry storage slot (122) respectively.

4. The slot die coating apparatus (1) of claim 2, wherein the shim group includes a central shim plate (14) to separate completely the first slurry storage slot (112) and the second slurry storage slot (122).

5. The slot die coating apparatus (1) of claim 4, wherein the shim group further includes an upper shim plate (13), having a notch (131) and flatly disposed on the central shim plate (14), wherein the slurry from the first slurry storage slot (112) is dispensed from the middle portion of the coating nozzle via the notch (131).

6. The slot die coating apparatus (1) of claim 4, wherein the shim group further includes a first lower shim plate (16) and a second lower shim plate (15), wherein the first lower shim plate (16) shields parts of the second slurry storage slot (122) and has two through holes (161) corresponding to two sides of the second slurry storage slot (122), and the second lower shim plate (15) has two flow path slots (151) corresponding to the through holes (161), wherein the slurry from the second slurry storage slot (122) is dispensed from the both sides of the coating nozzle via the through holes (161) and the flow path slots (151).

7. The slot die coating apparatus (1) of claim 1, further comprising a sensor (50) to detect a relative position of an obstacle (73) of the substrate (72) with respect to the slot die coating apparatus (1) to adjust the distance between the first outlet (21) of the first flow path and the substrate (72) and the distance between the second outlet (22) of the second flow path and the substrate (72).

8. The slot die coating apparatus (1) of claim 7, wherein the sensor (50) detects the relative position of the obstacle (73) to determine the middle portion or the both sides of the coating nozzle to expose the slurry.

9. A slot die coating method, comprising the steps of
providing a substrate (72) with an obstacle (73) and a slot die coating apparatus (1), wherein the slot die coating apparatus (1) comprising:
a die body, having a flow path and a coating nozzle receiving a slurry from the flow path to dispense the slurry for coating; and
a shim group, disposed in the die body to divide the flow path into a first flow path and a second flow path, wherein the slurry through the first flow path is dispensed from a middle portion of the coating nozzle and the slurry through the second flow path is dispensed from two sides of the coating nozzle;
wherein the shim group includes two die lips (101, 102), which are corresponding to the second flow path and extended outward and protruded from the die body, and a distance between a first outlet (21) of the first flow path and the substrate (72) is greater than a distance between a second outlet (22) of the second flow path and the substrate (72);
dispensing the slurry from the first outlet (21) in front of the obstacle (73) of the substrate (72) to form a first lateral side (31);
closing the dispensing from the first outlet (21) and moving the slot die coating apparatus (1) far away from the substrate (72) to prevent the slot die coating apparatus (1) from colliding the obstacle (73);
dispensing the slurry from the second outlet (22) on both sides of the obstacle (73) of the substrate (72) to form two longitudinal sides (321, 322) on the substrate (72);
closing the dispensing from the second outlet (22) and moving the slot die coating apparatus (1) downward to an original height with respect to the substrate (72); and
dispensing the slurry from the first outlet (21) behind the obstacle (73) of the substrate (72) to form a second lateral side (33).

10. The slot die coating method of claim 9, wherein the substrate (72) with the obstacle (73) is transported by a roller (71) or conveyor and only moves along a single axis relative to the slot die coating apparatus (1).

11. The slot die coating method of claim 10, wherein the slot die coating apparatus (1) only moves in a direction perpendicular to the surface of the substrate (72) with the obstacle (73).
